# EUROPÄISCHE PATENTSCHRIFT

(11) **EP 3 031 593 B1**
(45) Veröffentlichungstag und Bekanntmachung des Hinweises auf die Patenterteilung: **06.06.2018**
(21) Anmeldenummer: 15194466.7
(22) Anmeldetag: 13.11.2015
(51) Int. Cl.: B29C 45/66

(54) **SPRITZGIESSMASCHINE MIT EINER SCHLIESSEINHEIT**
INJECTION MOLDING MACHINE WITH A CLAMPING UNIT
MACHINE DE MOULAGE PAR INJECTION COMPRENANT UNE UNITE DE FERMETURE

(30) Priorität: 08.12.2014 DE 102014225165
(43) Veröffentlichungstag der Anmeldung: 15.06.2016
(73) Patentinhaber: Sumitomo (SHI) Demag Plastics Machinery GmbH, 90571 Schwaig (DE); Technische Universität Dresden, 01069 Dresden (DE)
(72) Erfinder: Kobel, Peter, 01237 Dresden (DE); Hanke, Uwe, 01454 Radeberg (DE); Neumann, Rudolf, 01445 Radebeul (DE)
(74) Vertreter: Rau, Schneck & Hübner Patentanwälte Rechtsanwälte PartGmbB

(56) Entgegenhaltungen:
- WO-A1-2015/011102
- DE-B3-102013 214 244
- JP-Y1- S5 017 962

## Beschreibung

Die vorliegende Patentanmeldung nimmt die Priorität der deutschen Patentanmeldung DE 10 2014 225 165.6 in Anspruch, deren Inhalt durch Bezugnahme hierin aufgenommen wird.

Die Erfindung betrifft eine Spritzgießmaschine mit den im Oberbegriff des Patentanspruches 1 angegebenen Merkmalen.

Diese Merkmale geben die grundsätzlichen Komponenten von Spritzgießmaschinen in Bezug auf deren bewegliche und feste Form-Aufspannplatten, eine feste Abstützplatte und eine Schließeinheit zum Zustellen der beweglichen Form-Aufspannplatte wieder, wie sie seit langem aus verschiedensten Druckschriften zum Stand der Technik bekannt sind. Beispielhaft sind die DE 25 36 880 A1, DE 43 28 844 C2, DE 199 57 485 A1, DE 103 42 012 A1, EP 0 511 170 B1 oder EP 0 775 567 A1 zu nennen. Die Schließeinheiten dieser Spritzgießmaschinen haben gemeinsam, dass ein parallel zur Zustellrichtung der beweglichen Aufspannplatte in Richtung der festen Aufspannplatte angetriebenes Antriebselement beispielsweise in Form eines Kreuzkopfes auf einem Spindeltrieb zur Einleitung einer Betätigungskraft in die Schließeinheit vorhanden ist. Die gelenkig mit diesem Antriebselement verbundene Lenkeranordnung zwischen der Abstützplatte und der beweglichen Aufspannplatte zur Übertragung der Bewegung des Antriebselementes auf die bewegliche Aufspannplatte im Sinne einer Zustellung der beweglichen Aufspannplatte relativ zur festen Aufspannplatte ist bei diesen vorbekannten Schließeinheiten durch eine typische Kniehebelanordnung mit zwei Lenkern zwischen Abstützplatte und beweglicher Aufspannplatte gebildet, die durch einen dritten Lenker zum Antriebselement komplettiert ist.

Derartige bekannte Schließeinheiten einer Spritzgießmaschine erfüllen damit die Hauptaufgabe des Öffnen und Schließens des Werkzeuges sowie dessen Zuhalten während des Einspritzens von Kunststoff in die Kavität des Werkzeuges. Durch die Kraftübersetzung der Schließeinheit ist es möglich, mit einer vergleichsweise geringen Antriebskraft eine hohe Schließkraft zu erzeugen, was durch den Einsatz einer Kniehebelkonstruktion - beispielsweise auch als Doppelkniehebel in Form von Vier- und Fünf-Punkt-Kniehebeln, wie dies in der US 5,971,743 offenbart ist - realisiert ist. Sowohl die hohe Kraftübersetzung für den Schließkraftaufbau als auch das Zuhalten des Werkzeuges wird durch Ausnutzung einer Umkehrlage der Kniehebelanordnung gewährleistet.

Dieses grundsätzliche Kniehebelkonzept wird auch bei etwas abweichenden Konstruktionen ausgenutzt, wie beispielsweise dem aus der DE 10 2004 026 450 B4 bekannten Doppelkurbelantrieb für eine Schließeinheit.

Diese bekannten Kniehebellösungen nutzen die Umkehrlage der beweglichen Aufspannplatte zur Erzeugung der hohen Schließkräfte. Problematisch dabei ist, dass die Umkehrlage nicht voll ausgenutzt werden kann. In der Regel erfolgt die Maschineneinrichtung nämlich so, dass der Arbeitspunkt kurz vor oder nach der Umkehrlage liegt, was wiederum den Bereich einschränkt, der zum Aufbau der Zuhaltekräfte notwendig ist. Die theoretisch mögliche Kraftübersetzung kann somit nicht erreicht werden.

Ein weiterer Nachteil dieser vorbekannten Kniehebellösungen liegt darin, dass aus der Umkehrlage naturgemäß die bewegliche Aufspannplatte nur in einer Richtung, nämlich in Öffnungsrichtung, herausbewegt werden kann. Dies schränkt die Eignung einer solchen Schließeinheit zur Durchführung einer sogenannten Prägefunktion ein, bei der nach Einnahme der Schließposition des Werkzeuges noch eine weitere Zustellbewegung in Schließrichtung zum Durchführen eines Prägeschrittes auf das in die Kavität eingespritzte Kunststoffmaterial vonstatten geht.

Die nachveröffentlichten Druckschriften der Anmelderin, nämlich DE 10 2013 214 244 B3 und WO 2015/011102 A1 offenbaren eine Schließeinheit für eine Spritzgießmaschine, bei der die Lenker derart miteinander gekoppelt sind, dass die Gelenkachse zwischen Zentral- und Abtriebslenker auf einer nicht-kreisförmigen Bewegungsbahn läuft. Die Gerade, auf der in der Zuhalteposition der beweglichen Aufspannplatte die vier Gelenkachsen dieser Lenkeranordnung auf einer Geraden liegen, steht dabei senkrecht auf einer Tangente genau in einem Wendepunkt der Bewegungsbahn der Gelenkachse zwischen Zentral- und Abtriebslenker.

Aus der JP S50 17962 Y1 ist eine Schließeinheit für eine Spritzgießmaschine bekannt, deren Lenkeranordnung drei gelenkig gekoppelte Lenker umfasst, nämlich einen an der Abstützplatte angelenkten Hilfslenker, einen daran angelenkten Zentrallenker, der mit dem Antriebselement gekoppelt ist, und einen Abtriebslenker zwischen dem Zentrallenker und der bewegliche Aufspannplatte. In einer Zuhalteposition der beweglichen Aufspannplatte liegen die vier Gelenkachsen dieser Lenkeranordnung auf einer Geraden. Nähere Angaben über die Bewegungsbahn der einzelnen Lenker und einem möglichen Prägehub der beweglichen Formaufspannplatte sind auch dieser Druckschrift nicht entnehmbar.

Ausgehend von den geschilderten Problemen des Standes der Technik liegt der Erfindung die Aufgabe zugrunde, eine Spritzgießmaschine mit einer verbesserten Schließeinheit bereitzustellen, mit deren Hilfe eine hohe Kraftübersetzung zur Erzeugung hoher Schließkräfte bei einer fortlaufenden Abtriebsbewegung ermöglicht wird. Unter einer solchen fortlaufenden Abtriebsbewegung ist zu verstehen, dass die bewegliche Aufspannplatte aus dem Bereich der hohen Kraftübersetzung, also praktisch in der Zuhalteposition, in zwei Richtungen herausbewegt werden kann. Die Zuhalteposition soll also nicht mehr mit einer Umkehrlage einer üblichen Kniehebelanordnung verbunden sein.

Die vorstehende Aufgabe wird durch die im Kennzeichnungsteil des Anspruches 1 angegebenen Merkmale gelöst, wonach die Lenker derart miteinander gekoppelt sind, dass die Gelenkachse zwischen Zentral- und Abtriebslenker auf einer nicht-kreisförmigen Bewegungsbahn läuft. Die Gerade, auf der in der Zuhalteposition der beweglichen Aufspannplatte die vier Gelenkachsen dieser Lenkeranordnung auf einer Geraden liegen, steht dabei senkrecht auf einer Tangente außerhalb eines Wendepunktes der Bewegungsbahn der Gelenkachse zwischen Zentral- und Abtriebslenker.

Die Bewegungsbahn der Gelenkachse zwischen Zentral- und Abtriebslenker weist also mit anderen Worten in dem Punkt, in dem die Gelenkachse bei geradliniger Anordnung der Gelenkachsen genau dann liegt, wenn die Zuhalteposition der Schließeinheit eingenommen wird, keinen Wendepunkt auf. Aufgrund der Ausprägung der Bewegungsbahn der Gelenkachse zwischen Zentral- und Abtriebslenker mit einem Wendepunkt in der Nähe der Zuhalteposition und einem in Richtung der festen Aufspannplatte führenden Prägeast kann also die Gelenkachse zwischen Zentral- und Antriebslenker angetrieben durch das Antriebselement sowohl weiter in Zustellrichtung beispielsweise zur Durchführung eines Prägeschrittes oder entgegen der Zustellrichtung zum Öffnen des Werkzeuges bewegt werden. Gleichwohl wird durch Ausrichtung der vier Gelenkachsen auf einer Geraden, die senkrecht auf der Tangente an die Bewegungsbahn der Gelenkachse zwischen Zentral- und Abtriebslenker steht, die übliche Selbsthemmung der Getriebeanordnung analog der Totpunktlage eines Kniehebels erzielt. Die Schließeinheit befindet sich also in einer Stellung höchster Kraftübersetzung, wonach anschließend noch ein Prägehub aus dieser Stellung heraus auf die feste Aufspannplatte realisiert werden kann.

Zusammenfassend wird also durch eine gezielte Gestaltung der Bewegungsbahn der Gelenkachse zwischen Zentral- und Abtriebslenker ein optimaler Kompromiss zwischen einer hohen Kraftübersetzung in der selbstgesperrten Zuhalteposition und der Möglichkeit erreicht, aus dieser Position heraus einen Prägehub weiter in Zustellrichtung durchzuführen.

Der Wendepunkt der Bewegungsbahn liegt vorzugsweise innerhalb eines Bereiches, der durch einen Auslenkungswinkel des Abtriebslenkers von ±20° um seine Gelenkachse gegenüber der Zuhalteposition gekennzeichnet ist. In anderer Abgrenzung kann sich die Gelenkachse in der Zuhalteposition um ein Maß außerhalb des Wendepunktes der Bewegungsbahn befinden, das durch einen Auslenkungswinkel des Abtriebslenkers von mindestens 1° um seine Gelenkachse gegenüber der Zuhalteposition definiert ist.

Eine bevorzugte Gestaltung der Bewegungsbahn sieht in Zustellrichtung einen im Wesentlichen linearen, schräg zur Zustellung verlaufenden Zustell-Ast und einen sich wiederum daran anschließenden, weiter in Zustellrichtung verlaufenden Prägeast vor. In der Nähe der Zuhalteposition der Gelenkachse zwischen Zentral- und Abtriebslenker kann also eine günstige Ausführungsform der Bewegungsbahn den Wendepunkt aufweisen, der entweder im Zustellast oder im Prägeast liegt. Letzterer erlaubt es, dass in dessen Verlauf die bewegliche Aufspannplatte aus der Zuhalteposition weiter auf die feste Aufspannplatte zu bewegbar ist

Zustell-Ast und Präge-Ast der Bewegungsbahn können vorteilhafterweise so ausgerichtet sein, dass beim Durchlauf des Zustell-Astes ein gegenüber dem Präge-Ast vorzugsweise deutlich höhere Übersetzung zwischen der Bewegung des Antriebselementes und der beweglichen Aufspannplatte stattfindet. Damit kann während des Zustellens eine schnelle Bewegung der beweglichen Aufspannplatte, während des Prägens eine hohe Prägekraft erzielt werden.

Gemäß einer weiteren bevorzugten Ausführungsform der Erfindung ist in der Zuhalteposition der Hilfslenker in eine von der beweglichen Aufspannplatte derart weg weisenden Richtung ausgerichtet, dass sich Hilfslenker und Zentrallenker in dieser Zuhalteposition zumindest teilweise überlagern. Damit wird eine kompakte Bauform des Schließmechanismus erzielt.

Diesem Zweck dient auch die weitere bevorzugte Ausgestaltung der Erfindung, wonach die Länge des Hilfslenkers maximal der Hälfte der Länge von Zentral- oder Abtriebslenker entspricht. Diese Formgebung wird im Übrigen auch durch die zu erzielende Bewegungsbahn der Gelenkachse zwischen Zentral- und Abtriebslenker beeinflusst.

Gemäß einer alternativen Ausführungsform der Erfindung weist in Zuhalteposition der Hilfslenker in Richtung der beweglichen Aufspannplatte, der Zentrallenker jedoch von ihr weg. Diese Bauform erlaubt eine günstigere Gestaltung der Abstützplatte.

Es kann sich vorteilhafterweise die Gelenkachse zwischen Abtriebslenker und beweglicher Aufspannplatte in der Zuhalteposition im Krümmungsmittelpunkt der Bewegungsbahn der Gelenkachse zwischen Zentral- und Abtriebslenker befinden. Damit wird die Güte der Kraftübersetzung, wie sie durch die erfindungsgemäße Schließeinheit erzielt werden kann, deutlich erhöht. Es verlängert sich dadurch der Bereich hoher Kraftübersetzung vor und nach dem Arbeitspunkt der Schließeinheit in der Zuhalteposition.

Wie an sich aus dem Stand der Technik bekannt ist, können zwei oder mehr einander entsprechende Lenkeranordnungen spiegelsymmetrisch zur Antriebsachsenebene des Antriebselementes vorgesehen und mit diesem gekoppelt sein. Die Zustellrichtung der beweglichen Aufspannplatte und damit die Ausrichtung der Schließeinheit können horizontal oder vertikal ausgerichtet sein. Die Erfindung ist also gleichermaßen für eine horizontale wie vertikale Ausführung einer Spritzgießmaschine geeignet.

Bevorzugte Alternativen für die Betätigung des Antriebselementes sind durch einen pneumatischen oder hydraulischen Kolben-Zylinder-Antrieb, einen Spindeltrieb, einen Zahnstangenantrieb oder einen Linearmotor gegeben.

Weitere Merkmale, Einzelheiten und Vorteile der Erfindung ergeben sich aus der nachfolgenden Beschreibung zweier Ausführungsbeispiele anhand der beigefügten Zeichnungen. Es zeigen:
- Fig. 1 bis 3: schematische Teil-Seitenansichten einer ersten Ausführungsform einer Spritzgießmaschine in unterschiedlichen Arbeitspositionen der beweglichen Form-Aufspannplatte und der Schließeinheit,
- Fig. 4: eine vergrößerte, ausschnittsweise Darstellung der Bewegungsbahn und der Lenkeranordnung in Zuhalteposition gemäß Fig. 2,
- Fig. 5: eine horizontal zweigeteilte, aus den Fig. 2 und 3 kombinierte Ansicht der Spritzgießmaschine in Zuhalteposition (unten) und Prägestellung (oben) der beweglichen Aufspannplatte, für zwei mögliche Ausführungen,
- Fig. 6 bis 8: schematische Teil-Seitenansichten einer zweiten Ausführungsform einer Spritzgießmaschine in unterschiedlichen Arbeitspositionen der beweglichen Form-Aufspannplatte und der Schließeinheit,
- Fig. 9: eine vergrößerte, ausschnittsweise Darstellung der Bewegungsbahn und der Lenkeranordnung in Zuhalteposition gemäß Fig. 7,
- Fig. 10: eine horizontal zweigeteilte, aus den Fig. 7 und 8 kombinierte Ansicht der Spritzgießmaschine in Zuhalteposition (unten) und Prägestellung (oben) der beweglichen Aufspannplatte, für zwei mögliche Ausführungen,
- Fig. 11: eine teilweise geschnittene Teil-Seitenansicht einer konstruktiv ausgeführten Spritzgießmaschine in vollständig geöffneter Position von beweglicher Aufspannplatte und Schließeinheit analog Fig. 1,
- Fig. 12: eine Teil-Draufsicht auf die Spritzgießmaschine gemäß Fig. 11,
- Fig. 13: eine Ansicht analog Fig. 11 in der Zuhalteposition von beweglicher Aufspannplatte und Schließeinheit entsprechend Fig. 2,
- Fig. 14: eine Ansicht analog Fig. 11 in weiter zugestellter Prägestellung der beweglichen Aufspannplatte entsprechend Fig. 3,
- Fig. 15: eine horizontal zweigeteilte, aus den Fig. 13 und 14 kombinierte Ansicht der Schließeinheit in Zuhalteposition (oben) bzw. Prägestellung (unten) entsprechend Fig. 4, und
- Fig. 16: eine Teil-Draufsicht in analog Fig. 15 zweigeteilter Darstellung der Schließeinheit in Zuhalteposition (oben) bzw. Präge-Stellung (unten).

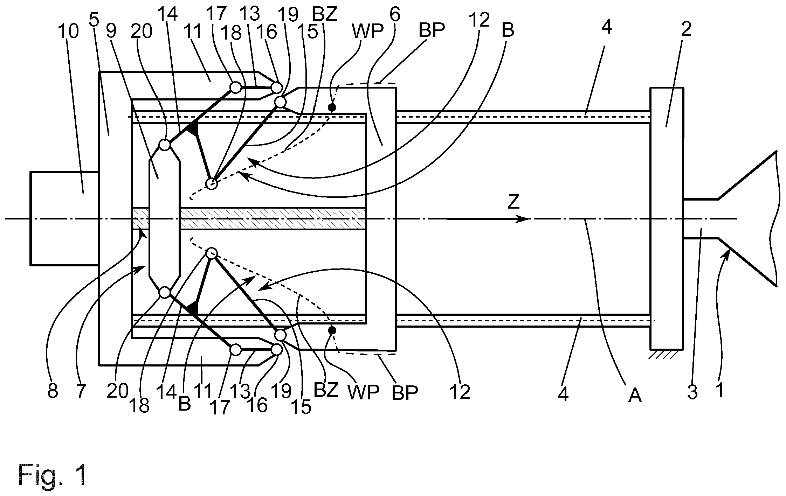

Anhand der Fig. 1 bis 10 soll die grundsätzliche Konstruktion der in diesen Darstellungen ausschnittsweise und nur höchst schematisch gezeigten Ausführungen der Spritzgießmaschine erläutert werden. Lediglich knapp angerissen ist die übliche Einspritzeinheit 1 der Spritzgießmaschine, die außen an der festen Form-Aufspannplatte 2 über einen üblicherweise Düsenansatz 3 angebunden ist. Über vier parallele, im Viereck angeordnete Holme 4 ist eine feste Abstützplatte 5 an die feste Aufspannplatte 2 angebunden. Auf diesen Holmen 4 ist schließlich eine bewegliche Form-Aufspannplatte 6 in Zustellrichtung Z verschiebbar geführt, so dass ein in den Fig. 1 bis 10 nicht näher dargestelltes Formwerkzeug mit einer entsprechenden Kavität zwischen zwei Formhälften geöffnet und geschlossen und gegebenenfalls einem Prägeschritt unterworfen werden kann.

Zum Antrieb der beweglichen Aufspannplatte 6 dient die als Ganzes mit 7 bezeichnete Schließeinheit, die einen Spindeltrieb 8 für einen darauf geführten Kreuzkopf 9 als Antriebselement zur Einleitung einer Betätigungskraft in die Schließeinheit 7 aufweist. Der Spindeltrieb 8 wird durch einen Elektromotor 10 an der festen Abstützplatte 5 angetrieben.

Zur Übertragung der Vorschubbewegung des Kreuzkopfes 9 auf die bewegliche Aufspannplatte 6 in und entgegen der Zustellrichtung Z ist zwischen dieser Aufspannplatte 6, dem Kreuzkopf 9 und den in Zustellrichtung Z von der festen Abstützplatte 5 abstehenden Lagerstreben 11 eine zweifach oben und unten vorhandene Lenkeranordnung 12 vorgesehen. Im Folgenden wird nur die bezogen auf die Fig. 1 bis 10 oben liegende Lenkeranordnung 12 näher erläutert. Die unten liegende Lenkeranordnung 12 ist gegenüber der horizontalen Antriebsachsenebene A spiegelsymmetrisch aufgebaut.

Die Lenkeranordnung 12 ist aus drei aneinandergereihten und gelenkig gekoppelten Lenkern zusammengesetzt, nämlich einem am freien Ende der Lagerstrebe 11 an der Abstützplatte 5 angelenkten Hilfslenker 13 und einem wiederum daran angelenkten Zentrallenker 14, der auch gelenkig am Kreuzkopf 9 als Antriebselement angelenkt ist. Ferner ist ein Abtriebslenker 15 gelenkig an den Zentrallenker 14 und die bewegliche Aufspannplatte 6 angebunden. Die entsprechenden Gelenkachsen sind mit den Bezugsziffern 16 für das Gelenk Abstützplatte 5/Hilfslenker 13 bzw. Gelenkachse 17 für das Gelenk Hilfslenker 13/Zentrallenker 14 bzw. Gelenkachse 18 für das Gelenk Zentrallenker 14/Abtriebslenker 15 bzw. Gelenkachse 19 für das Gelenk Abtriebslenker 15/bewegliche Aufspannplatte 6 bzw. Gelenkachse 20 für das Gelenk Zentrallenker 14/Kreuzkopf 9 bezeichnet.

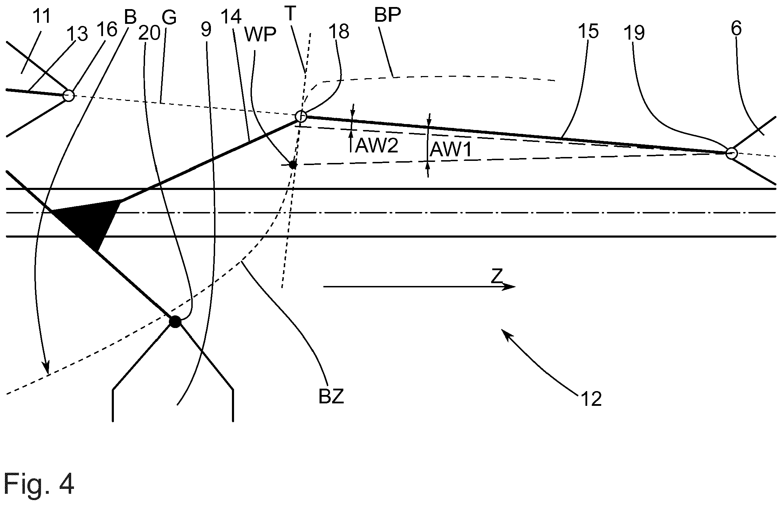

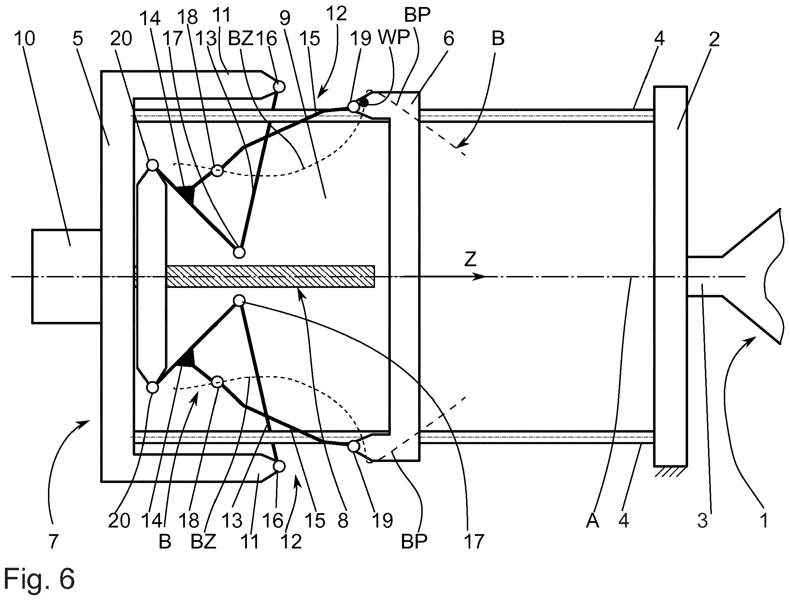

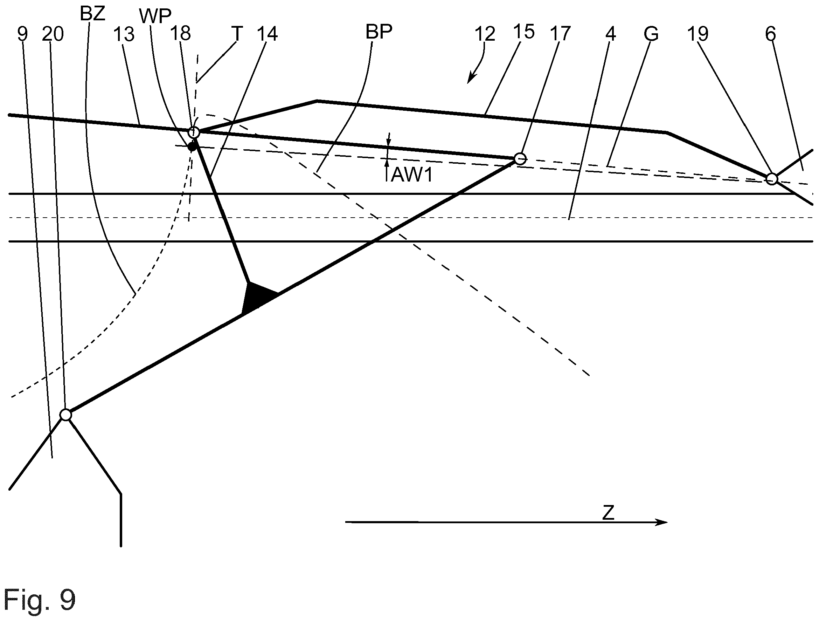

Wichtig für die Funktion der Schließeinheit 7 ist die Bewegung der Gelenkachse 18 zwischen Zentrallenker 14 und Abtriebslenker 15, die auf einer in den Fig. 1 bis 10 dargestellten, nicht-kreisförmigen Bewegungsbahn B läuft. Letztere ist dabei in zwei Äste eingeteilt, nämlich einen in den Fig. 1 bis 10 kurz gestrichelt dargestellten Zustell-Ast BZ, der je nach Ausführung im Wesentlichen linear und schräg (Fig. 1 bis 5) oder bogenförmig (Fig. 6 bis 10) zur Zustellrichtung Z verläuft. In dem Punkt, wo sich die Gelenkachse 18 in Zuhalteposition befindet schließt sich der Prägeast BP an, der in den Fig. 1 bis 10 lang gestrichelt dargestellt ist und je nach Ausführung im Wesentlichen parallel oder schräg zur Zustellrichtung Z verläuft. In den in Fig. 1 bis 5 bzw. 6 bis 10 gezeigten Ausführungen befindet sich der Wendepunkt WP der Bewegungsbahn B des Gelenkpunktes 18 im Zustellast und wird somit beim Schließen vor Erreichen der Zuhalteposition durchlaufen. Dieser Wendepunkt WP der Bewegungsbahn B liegt dabei innerhalb eines Bereiches, der durch einen Auslenkungswinkel AW1 des Abtriebslenkers 15 von maximal ±20° um seine Gelenkachse 19 gegenüber der Zuhalteposition gekennzeichnet ist, wie dies in Fig. 4 und 9 angedeutet ist. Ferner befindet sich die Gelenkachse 18 in der Zuhalteposition um ein Maß außerhalb des Wendepunktes WP der Bewegungsbahn B, das durch einen Auslenkungswinkel AW2 des Abtriebslenkers 15 von mindestens 1° um seine Gelenkachse 19 gegenüber der Zuhalteposition definiert ist, wie der Übersichtlichkeit halber nur in Fig. 4 gezeigt ist.

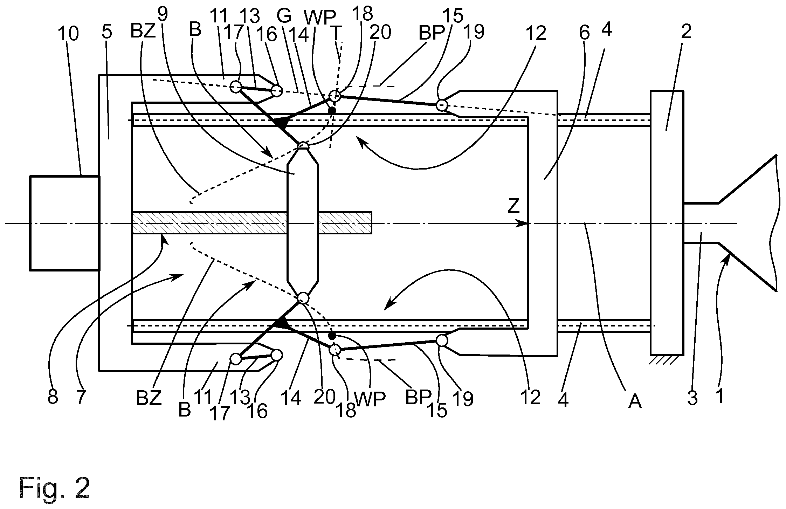

Die Lenkeranordnung 12 mit Hilfs-, Zentral- und Antriebslenker 13, 14, 15 ist im Zusammenspiel mit der Anbindung an den Kreuzkopf 9 so ausgelegt, dass in der in Fig. 2 dargestellten Zuhalteposition der beweglichen Aufspannplatte 6 die vier Gelenkachsen 16, 17, 18, 19 der Lenkeranordnung 12 auf einer Geraden G liegen, die senkrecht auf einer Tangente T an der Bewegungsbahn B steht. Aufgrund dieser Auslegung der Lenkeranordnung 12 mit der entsprechenden Bewegungsbahn B wird im Bereich dieser Zuhalteposition die höchste Kraftübersetzung zwischen dem Kreuzkopf 9 und der beweglichen Aufspannplatte 6 erzielt. Gleichzeitig ist aufgrund der Anordnung der vier Gelenkachsen 16 bis 19 auf der Geraden G die Schließeinheit 7 in dieser Zuhalteposition selbstsperrend, so dass hohe Zuhaltekräfte auf das Werkzeug zwischen fester Aufspannplatte 2 und beweglicher Aufspannplatte 6 erzielt werden.

Aufgrund der Auslegung der Bewegungsbahn B mit dem Wendepunkt WP in der Nähe der Zuhalteposition kann die Schließeinheit 7 aus der in Fig. 2 gezeigten Zuhalteposition einerseits zurückgefahren werden, indem der Kreuzkopf 9 wieder entgegen der Zustellrichtung Z bewegt und damit in Richtung der in Fig. 1 gezeigten Offenstellung der beweglichen Aufspannplatte 6 verschoben wird. Andrerseits wird durch eine entgegengesetzte Bewegung des Kreuzkopfes 9 in Zustellrichtung Z - anders als bei einer üblichen Kniehebelanordnung aus der Totpunktstellung heraus - die bewegliche Aufspannplatte 6 weiter in Zustellrichtung Z auf dem Prägeast BP verschoben. Hierbei wird aufgrund der Ausrichtung des Prägeastes BP eine geringe Wegübersetzung und hohe Prägekraft aus der Bewegung des Kreuzkopfes 9 auf die bewegliche Aufspannplatte 6 abgeleitet. Die gezeigte Schließeinheit 7 ist also gerade für das sogenannte Spritzprägen besonders geeignet.

Unterstützend für die Auslegung der Bewegungsbahn B sind konstruktive Maßnahmen im Bereich der Lenkeranordnung 12 vorgesehen, die im Folgenden kurz erläutert werden sollen. So dient der Hilfslenker 13 während der Bewegung der Schließeinheit 7 zwischen der Offenstellung gemäß Fig. 1 und der Zuhalteposition gemäß Fig. 2 im Wesentlichen der Verankerung des Zentrallenkers 14 und erlaubt somit die Führung der Gelenkachse 18 auf der Bahn B. So kann die Bewegung des Kreuzkopfes 9 in eine Streckbewegung von Zentrallenker 14 und Abtriebslenker 15 umgesetzt und die Bewegung so auf die bewegliche Aufspannplatte 6 übertragen werden. In der Zuhalteposition gemäß Fig. 2 ist dann der Hilfslenker 13 kolinear auf der Geraden G mit dem Abtriebslenker 15 und dem Zentrallenker 14 bezüglich der Gelenkachsen 16 bis 19 angeordnet, und weist je nach Bauform ausgehend von der Gelenkachse 16 in oder entgegen der Zustellrichtung Z. In Zuhalteposition überlappen sich Hilfslenker 13 und Zentrallenker 14 bzw. Hilfslenker 13, Zentrallenker 14 und Abtriebslenker 15 teilweise.

In einer weiteren Ausführung der Bewegungsbahn liegt der Wendepunkt in Zustellrichtung hinter der Zuhalteposition der Gelenkachse 18. In diesem Fall ist der Abtriebslenker 15 in Zuhalteposition so ausgerichtet, dass er ausgehend von der Gelenkachse 18 in entgegen der Zustellrichtung weist. Dabei überlappen sich Hilfslenker 13, Zentrallenker 14 und Abtriebslenker 15 ebenso teilweise.

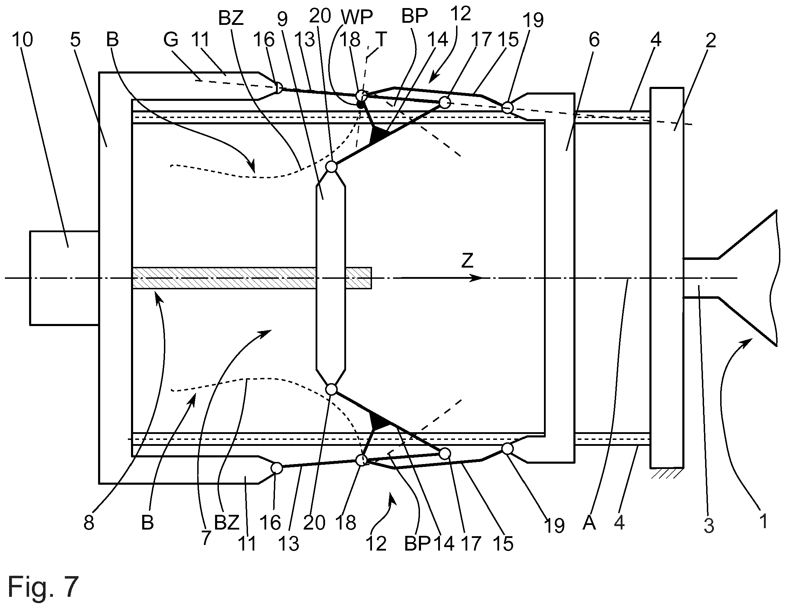

Bezüglich der Gelenkachse 19 zwischen Abtriebslenker 15 und beweglicher Aufspannplatte 6 ist festzuhalten, dass sich diese in der Zuhalteposition gemäß Fig. 2 bzw. 7 im Krümmungsmittelpunkt der Bewegungsbahn B befinden kann. Dies fördert die Güte der Kraftübersetzung zwischen dem Kreuzkopf 9 über die Lenkeranordnungen 12 auf die bewegliche Aufspannplatte 6.

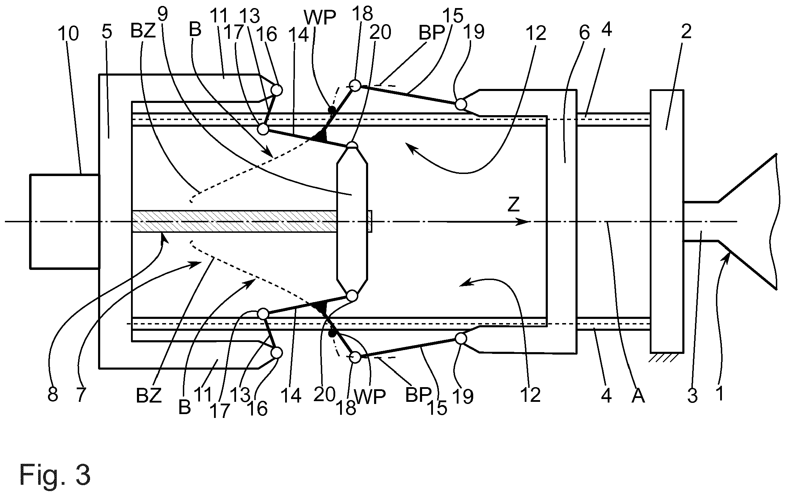

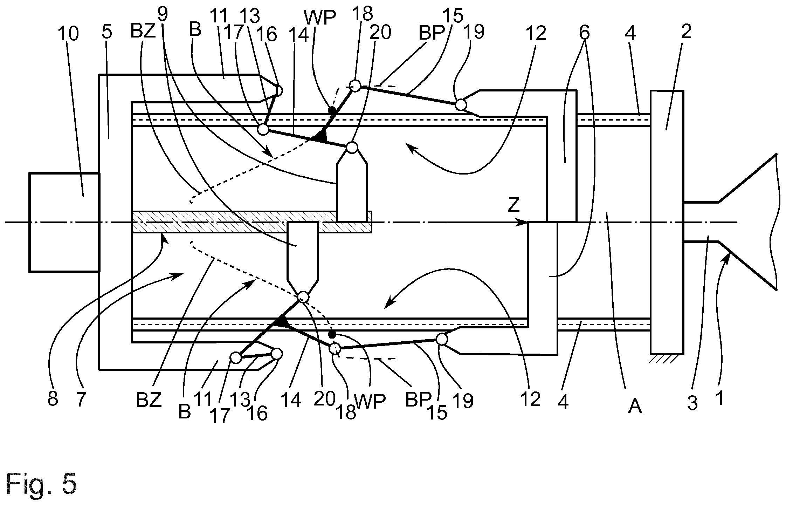

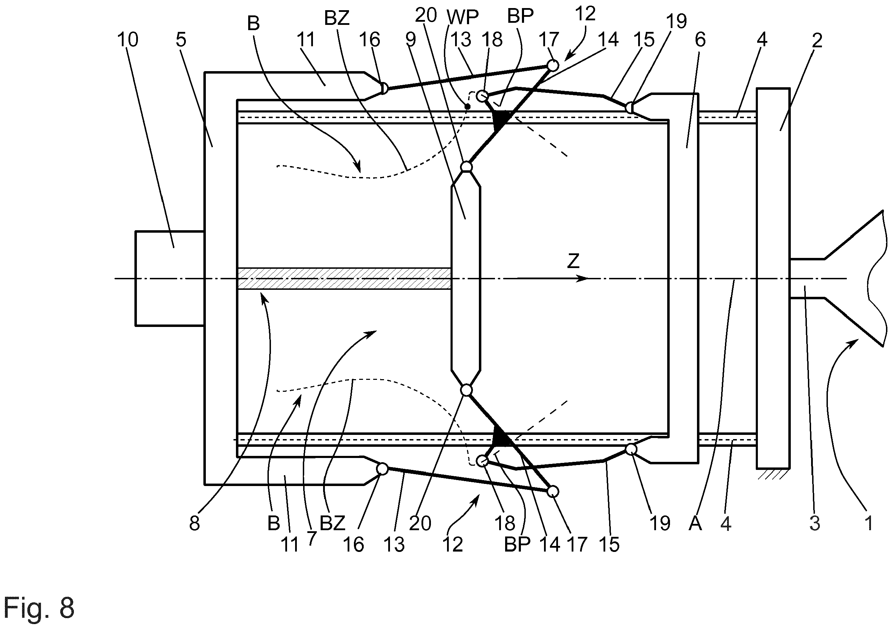

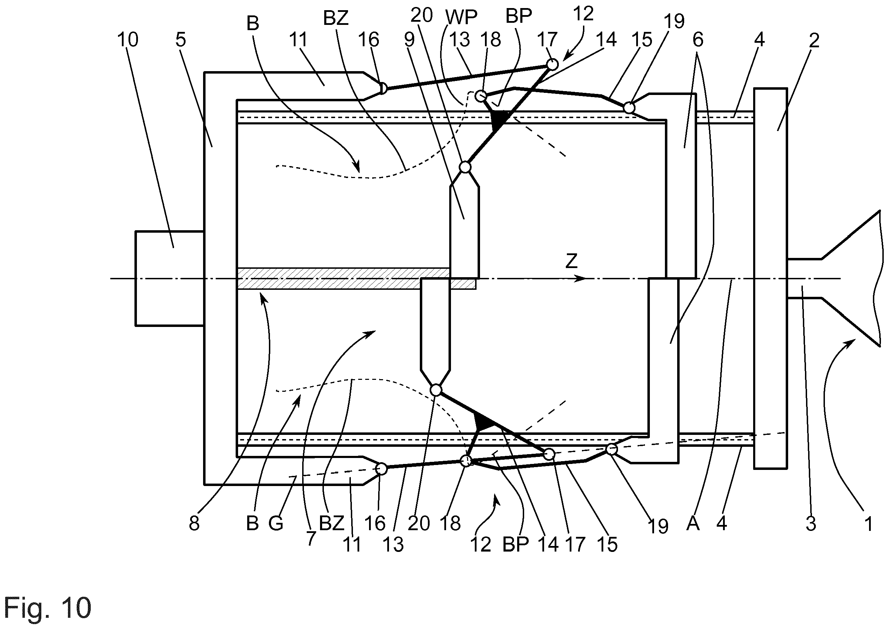

Zusammenfassend zeichnet sich die Schließeinheit 7 gegenüber den bekannten Kniehebel-Ausführungen dadurch aus, dass das Werkzeug in der Zuhalteposition in einer Zwischenstellung der Lenkeranordnung 12 zugehalten wird. Folglich ist es möglich, durch eine Weiterbewegung des Kreuzkopfes 9 in Zustellrichtung Z die bewegliche Aufspannplatte 6 aus dieser Zuhalteposition für das geschlossene Werkzeug gemäß Fig. 2 bzw. 7, in der der Mechanismus selbstsperrend ist, weiter auf die feste Aufspannplatte 2 zu zu bewegen, wie dies in Fig. 3 und 8 dargestellt und aus den Fig. 5 und 10 besonders augenfällig wird. Dort ist unten die Anordnung in der Zuhalteposition und oben die Anordnung in weiter zugefahrener Prägeposition gezeigt. Dabei durchläuft die Gelenkachse 18 einen Wendepunkt ihrer Bewegungsbahn B, anschließend bewegt sie sich in die Zuhalteposition und danach in den Prägeast PB hinein, wobei insbesondere zu Beginn der Weiterbewegung immer noch eine sehr hohe Kraftübersetzung vorliegt.

Soll die vorstehend beschriebene Prägefunktion nicht durchgeführt werden, so wird - wie oben bereits angedeutet - der Kreuzkopf 9 zurückgeführt und die Lenkeranordnung 12 bewegt sich aus der in Fig. 2 bzw. 7 gezeigten Zuhalteposition in Richtung der in Fig. 1 bzw. 6 gezeigten Offenstellung. Damit lässt sich auch ein üblicher Spritzgießvorgang mit der Schließeinheit 7 durchführen. Insoweit ist die Konstruktion universell einsetzbar.

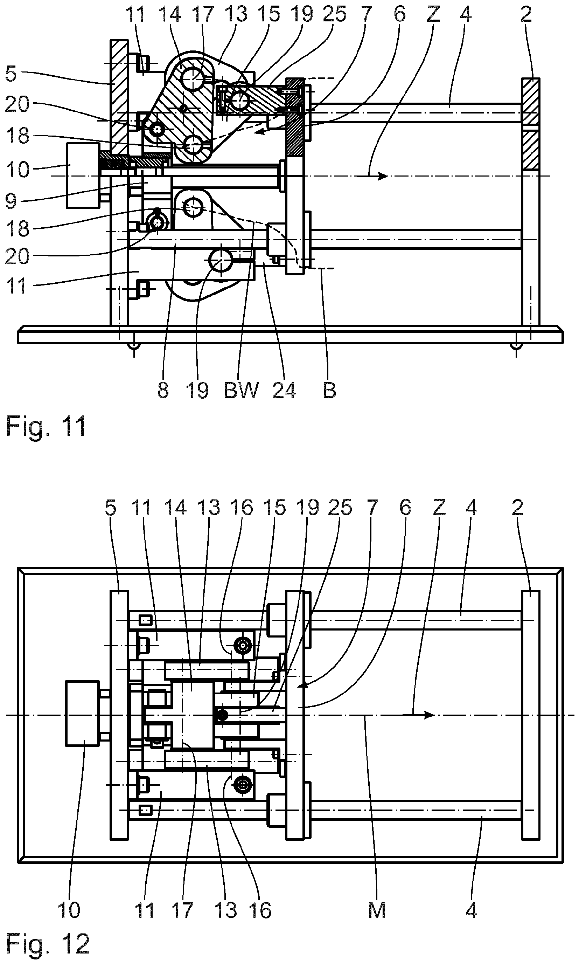

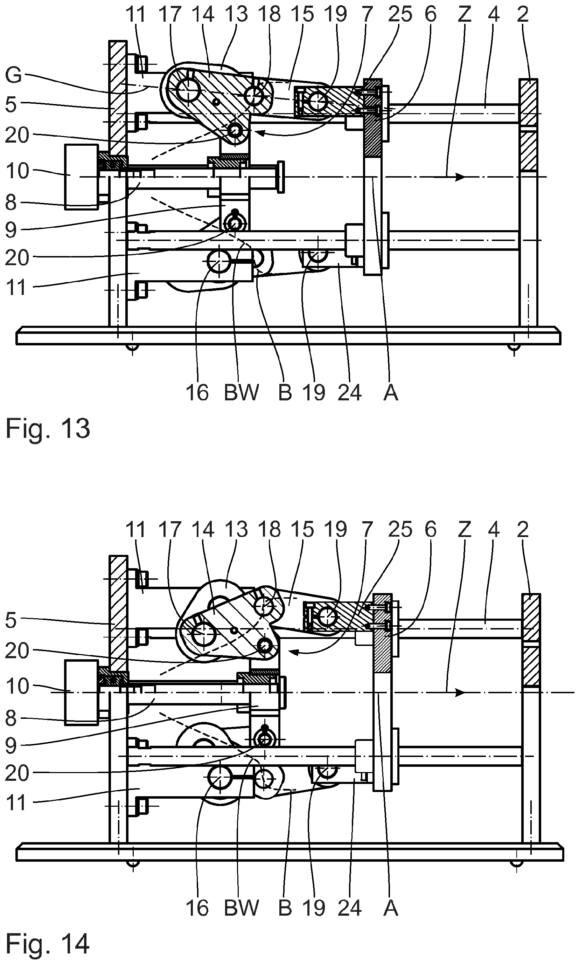

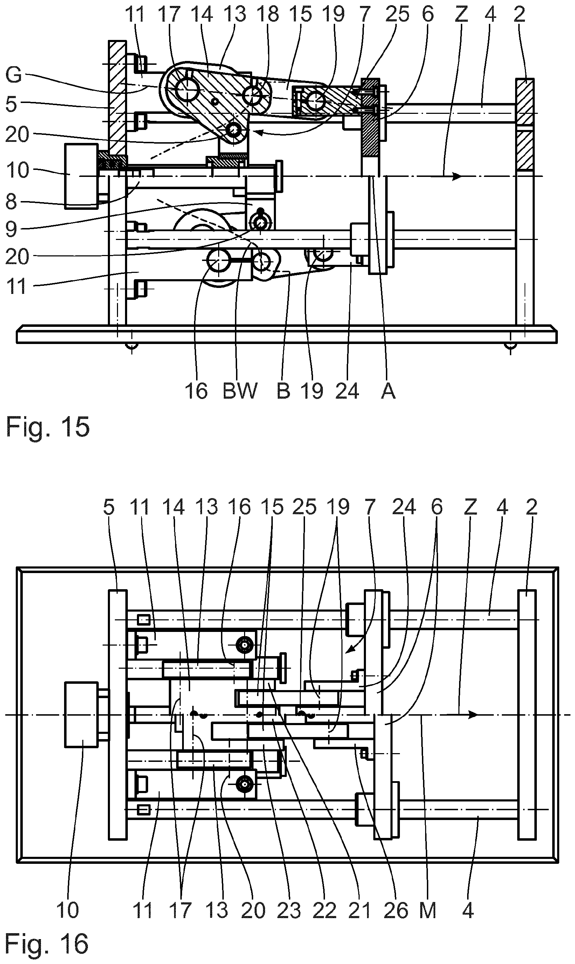

In den Fig. 11 bis 16 ist eine konstruktive Ausführung der in den Fig. 1 bis 5 schematisch dargestellten Schließeinheit 7 gezeigt. Übereinstimmende Bauteile sind dabei mit identischen Bezugszeichen versehen und müssen nicht nochmals eigens aufgeführt werden. Es ist lediglich insbesondere unter Bezugnahme auf die Fig. 12 und 16 hervorzuheben, dass die oberen und unteren Lenkeranordnungen 12 jeweils zur vertikalen Mittenebene M paarig vorhandene Lagerstreben 11 mit daran angelenkten paarigen Hilfslenkern 13 und einem gemeinsamen massiven Zentrallenker 14 aufweisen. An diesem sind mittig und beiderseits außen davor Lagerfortsätze 21, 22, 23 (Fig. 16) angeformt, zwischen denen die wiederum paarig angelegten Abtriebslenker 15 unter Ausbildung der Gelenkachse 18 angekoppelt sind. Die Gelenkachse 19 zwischen diesen paarigen Abtriebslenkern 15 und der beweglichen Aufspannplatte 6 ist wiederum durch drei dort angesetzte Lageransätze 24, 25, 26 (Fig. 16) gebildet, zwischen denen jeweils die paarigen Abtriebslenker 15 drehbar gelagert sind.

## Patentansprüche

1. Spritzgießmaschine, umfassend
- eine bewegliche Form-Aufspannplatte (6),
- eine feste Form-Aufspannplatte (2),
- eine feste Abstützplatte (5), und
- eine Schließeinheit (7) mit
= einem vorzugsweise parallel zur Zustellrichtung (Z) der beweglichen Aufspannplatte (6) angetriebenen Antriebselement (9) zur Einleitung einer Betätigungskraft in die Schließeinheit (7), sowie
= einer gelenkig mit dem Antriebselement (9) verbundenen Lenkeranordnung (12) zwischen der Abstützplatte (5) und der beweglichen Aufspannplatte (6) zur Übertragung der Bewegung des Antriebselements (9) auf die bewegliche Aufspannplatte (6) im Sinne einer Zustellbewegung der beweglichen Aufspannplatte (6) relativ zur festen Aufspannplatte (2), sowie
- eine Ausbildung der Lenkeranordnung (12) mit drei gelenkig gekoppelten Lenkern (13, 14, 15), umfassend
= einen an der Abstützplatte (5) angelenkten Hilfslenker (13),
= einen daran angelenkten Zentrallenker (14), der direkt mit dem Antriebselement (9) gekoppelt ist, und
= einen Abtriebslenker (15) zwischen dem Zentrallenker (14) und der beweglichen Aufspannplatte (6),
**gekennzeichnet durch** eine derartige Kopplung der Lenker (13, 14, 15),
= dass die Gelenkachse (18) zwischen Zentral- (14) und Abtriebslenker (15) auf einer nicht-kreisförmigen Bewegungsbahn (B) läuft, die einen Wendepunkt (WP) aufweist, und
= dass in einer Zuhalteposition der beweglichen Aufspannplatte (6) die vier jeweils zwischen Abstützplatte (5), den Lenkern (13, 14, 15) und der beweglichen Aufspannplatte (6) gebildeten Gelenkachsen (16, 17, 18, 19) der Lenkeranordnung (12) auf einer Geraden (G) liegen, die senkrecht auf einer Tangente (T) an der Bewegungsbahn (B) der Gelenkachse (18) zwischen Zentral- (14) und Abtriebslenker (15) steht, wobei sich die Gelenkachse (18) in der Zuhalteposition außerhalb des Wendepunktes (WP) der Bewegungsbahn (B) befindet.

2. Spritzgießmaschine nach Anspruch 1, **dadurch gekennzeichnet, dass** der Wendepunkt der Bewegungsbahn (B) innerhalb eines Bereiches liegt, der durch einen Auslenkungswinkel (AW1) des Abtriebslenkers (15) von ±20° um seine Gelenkachse (19) gegenüber der Zuhalteposition gekennzeichnet ist.

3. Spritzgießmaschine nach Anspruch 1 oder 2, **dadurch gekennzeichnet, dass** sich die Gelenkachse (18) in der Zuhalteposition um ein Maß außerhalb des Wendepunktes (WP) der Bewegungsbahn (B) befindet, das durch einen Auslenkungswinkel (AW2) des Abtriebslenkers (15) von mindestens 1° um seine Gelenkachse (19) gegenüber der Zuhalteposition definiert ist.

4. Spritzgießmaschine nach einem der vorgenannten Ansprüche, **dadurch gekennzeichnet, dass** die Bewegungsbahn (B) in Zustellrichtung (Z) einen Zustell-Ast (BZ), und einen sich daran anschließenden, weiter in Zustellrichtung (Z) verlaufenden Präge-Ast (BP) aufweist, in dessen Verlauf die bewegliche Aufspannplatte (6) aus der Zuhalteposition weiter auf die feste Aufspannplatte (2) zu bewegbar ist.

5. Spritzgießmaschine nach Anspruch 4, **dadurch gekennzeichnet, dass** der Zustell-Ast (BZ) im Vergleich zum Präge-Ast (BP) derart ausgelegt ist, dass das Übersetzungsverhältnis zwischen der Bewegung des Antriebselementes (9) und der beweglichen Aufspannplatte (6) im ZustellAst (BZ) höher als im Präge-Ast (BP) ist.

6. Spritzgießmaschine nach einem der vorgenannten Ansprüche, **dadurch gekennzeichnet, dass** in der Zuhalteposition der Hilfslenker (13) in eine von der beweglichen Aufspannplatte (6) derart weg weisenden Richtung ausgerichtet ist, dass sich Hilfslenker (13) und Zentrallenker (14) in der Zuhalteposition zumindest teilweise überlagern.

7. Spritzgießmaschine nach einem der vorgenannten Ansprüche, **dadurch gekennzeichnet, dass** in der Zuhalteposition der Zentrallenker (14) in eine von der beweglichen Aufspannplatte (6) derart weg weisenden Richtung ausgerichtet ist, dass sich Hilfslenker (13), Zentrallenker (14) und Abtriebslenker (15) in der Zuhalteposition zumindest teilweise überlagern.

8. Spritzgießmaschine nach einem der vorgenannten Ansprüche, **dadurch gekennzeichnet, dass** die Länge des Hilfslenkers (13) maximal der Hälfte der Länge von Zentral- (14) oder Abtriebslenker (15) entspricht.

9. Spritzgießmaschine nach einem der vorgenannten Ansprüche, **dadurch gekennzeichnet, dass** sich die Gelenkachse (19) zwischen Abtriebslenker (15) und beweglicher Aufspannplatte (6) in der Zuhalteposition im Krümmungsmittelpunkt der Bewegungsbahn (B) befindet.

10. Spritzgießmaschine nach einem der vorgenannten Ansprüche, **dadurch gekennzeichnet, dass** in Zuhalteposition der Abtriebslenker (15) von der Gelenkachse (18) aus in Richtung der Abstützplatte (5) oder von ihr weg zeigt.

11. Spritzgießmaschine nach einem der vorgenannten Ansprüche, **dadurch gekennzeichnet, dass** die Funktion der Abstützplatte (5) mit von der festen Aufspannplatte (2) übernommen wird, wobei sich die Lenkeranordnung (12) auf Seiten der Einspritzeinheit (1) befindet und die in der festen Aufspannplatte (2) geführten, fest mit der beweglichen Aufspannplatte (6) verbundenen Säulen (4) gelenkig mit dem Abtriebslenker (15) verbunden sind.

12. Spritzgießmaschine nach einem der vorgenannten Ansprüche, **dadurch gekennzeichnet, dass** mindestens zwei einander entsprechende Lenkeranordnungen (12) spiegelsymmetrisch zur Antriebsachsenebene (A) des Antriebselementes (9) vorgesehen sind.

13. Spritzgießmaschine nach einem der vorgenannten Ansprüche, **dadurch gekennzeichnet, dass** die Zustellrichtung (Z) der beweglichen Aufspannplatte (6) horizontal oder vertikal ausgerichtet ist.

14. Spritzgießmaschine nach einem der vorgenannten Ansprüche, **dadurch gekennzeichnet, dass** das Antriebselement durch einen pneumatischen oder hydraulischen Kolben-Zylinder-Antrieb, einen Kreuzkopf (9) mit Spindeltrieb (8), einen Zahnstangenantrieb oder einen Linearmotor angetrieben ist.

## Claims

1. Injection moulding machine comprising:
- a movable moulding platen (6),
- a fixed moulding platen (2),
- a fixed support plate (5), and
- a clamping unit (7) having
= a drive element (9) which is preferably driven parallel with the application direction (Z) of the movable platen (6) in order to introduce an actuating force into the clamping unit (7), and
= a linkage assembly (12) between the support plate (5) and the movable platen (6), which, for transmitting the movement of the drive element (9) to the movable platen (6) in the context of an application movement of the movable platen (6) relative to the fixed platen (2), is connected in an articulated manner to the drive element (9), and
- a configuration of the linkage assembly (12) having three control arms (13, 14, 15) coupled in an articulated manner, comprising
= an auxiliary control arm (13) which is articulated on the support plate (5),
= a central control arm (14) which is articulated on said auxiliary control arm (13) and is directly coupled to the drive element (9), and
= an output control arm (15) interdisposed between the central control arm (14) and the movable platen (6),
**characterized by** a coupling of the control arms (13, 14) in such a way
= that the articulation axis (18) between the central control arm (14) and the output control arm (15) runs on a non-circular motion path (B) which has a reversal point (WP), and
= that in a closing position of the movable platen (6) the four articulation axes (16, 17, 18, 19) of the linkage assembly (12) which are in each case formed between the support plate (5), the control arms (13, 14, 15), and the movable platen (6) lie on a straight line (G) which is perpendicular on a tangent (T) on the motion path (B) of the articulation axis (18) between the central control arm (14) and the output control arm (15), wherein the articulation axis (18) in the closing position is located outside the reversal point (WP) of the motion path (B).

2. Injection moulding machine according to Claim 1, **characterized in that** the reversal point of the motion path (B) lies within a range which is **characterized by** a deflection angle (AW1) of the output control arm (15) of ±20° about the articulation axis (19) thereof in relation to the closing position.

3. Injection moulding machine according to Claim 1 or 2, **characterized in that** the articulation axis (18) in the closing position is located outside the reversal point (WP) of the motion path (B) by a dimension which is defined by a deflection angle (AW2) of the output control arm (15) of at least 1° about the articulation axis (19) thereof in relation to the closing position.

4. Injection moulding machine according to one of the preceding claims, **characterized in that** the motion path (B) in the application direction (Z) has an application branch (BZ) and, adjoining thereto, an embossing branch (BP) which runs further in the application direction (Z) and in the course of which the movable platen (6) is movable from the closing position further towards the fixed platen (2).

5. Injection moulding machine according to Claim 4, **characterized in that** the application branch (BZ) as compared with the embossing branch (BP) is conceived in such a manner that the gearing ratio between the movement of the drive element (9) and the movable platen (6) is higher in the application branch (BZ) than in the embossing branch (BP).

6. Injection moulding machine according to one of the preceding claims, **characterized in that** in the closing position the auxiliary control arm (13) is oriented in a direction which points away from the movable platen (6) in such a manner that the auxiliary control arm (13) and the central control arm (14) in the closing position are at least partially superimposed.

7. Injection moulding machine according to one of the preceding claims, **characterized in that** in the closing position the central control arm (14) is oriented in a direction which points away from the movable platen (6) in such a manner that the auxiliary control arm (13), the central control arm (14), and the output control arm (15) in the closing position are at least partially superimposed.

8. Injection moulding machine according to one of the preceding claims, **characterized in that** the length of the auxiliary control arm (13) at maximum corresponds to half the length of the central control arm (14) or of the output control arm (15).

9. Injection moulding machine according to one of the preceding claims, **characterized in that** the articulation axis (19) between the output control arm (15) and the movable platen (6) in the closing position is located in the centre of curvature of the motion path (B).

10. Injection moulding machine according to one of the preceding claims, **characterized in that** in the closing position the output control arm (15) points from the articulation axis (18) in the direction of the support plate (5) or away therefrom.

11. Injection moulding machine according to one of the preceding claims, **characterized in that** the function of the support plate (5) is conjointly assumed by the fixed platen (2), wherein the linkage assembly (12) is located on the side of the injection unit (1) and the posts (4) which are guided in the fixed platen (2) and are fixedly connected to the movable platen (6) are connected in an articulated manner to the output control arm (15).

12. Injection moulding machine according to one of the preceding claims, **characterized in that** at least two mutually corresponding linkage assemblies (12) are provided so as to be mirror-symmetrical in relation to the drive axis plane (A) of the drive element (9).

13. Injection moulding machine according to one of the preceding claims, **characterized in that** the application direction (Z) of the movable platen (6) is horizontally or vertically oriented.

14. Injection moulding machine according to one of the preceding claims, **characterized in that** the drive element is driven by a pneumatic or hydraulic piston-and-cylinder drive, a cross head (9) having a spindle drive (8), a rack-and-pinion drive, or a linear motor.

## Revendications

1. Machine à mouler par injection, comprenant
- une plaque de fixation de moule mobile (6),
- une plaque de fixation de moule fixe (2),
- une plaque support fixe (5), et
- une unité de fermeture (7), avec
= un élément d'entraînement (9) entraîné préférentiellement parallèlement à la direction d'avance (Z) de la plaque de fixation mobile (6), pour l'application d'une force d'actionnement dans l'unité de fermeture (7), ainsi
= qu'un dispositif de bielles (12) relié de manière articulée à l'élément d'entraînement (9) entre la plaque support (5) et la plaque de fixation mobile (6), pour la transmission du mouvement de l'élément d'entraînement (9) à la plaque de fixation mobile (6) dans le sens d'un mouvement d'avance de la plaque de fixation mobile (6) par rapport à la plaque de fixation fixe (2), ainsi
- qu'une réalisation du dispositif de bielles (12) avec trois bielles (13, 14, 15) accouplées de manière articulée, comprenant
= une bielle auxiliaire (13) articulée sur la plaque support (5),
= une bielle centrale (14) articulée, directement accouplée à l'élément d'entraînement (9), et
= une bielle menée (15) entre la bielle centrale (14) et la plaque de fixation mobile (6),
**caractérisé par** un accouplement des bielles (13, 14, 15) tel
= que l'axe d'articulation (18) entre bielle centrale (14) et bielle menée (15) décrit une trajectoire de déplacement (B) non circulaire qui présente un point de basculement (WP), et
= que dans une position de maintien de la plaque de fixation mobile (6), les quatre axes d'articulation (16, 17, 18, 19) du dispositif de bielles (12) respectivement formés entre la plaque support (5), les bielles (13, 14, 15) et la plaque de fixation mobile (6) sont situés sur une droite (G) perpendiculaire à une tangente (T) à la trajectoire de déplacement (B) de l'axe d'articulation (18) entre la bielle centrale (14) et la bielle menée (15), l'axe d'articulation (18) se trouvant en dehors du point de basculement (WP) de la trajectoire de déplacement (B) en position de maintien.

2. Machine à mouler par injection selon la revendication 1, **caractérisée en ce que** le point de basculement de la trajectoire de déplacement (B) est situé à l'intérieur d'une zone **caractérisée par** un angle de déviation (AW1) de la bielle menée (15) de ±20° autour de son axe d'articulation (19) par rapport à la position de maintien.

3. Machine à mouler par injection selon la revendication 1 ou 2, **caractérisée en ce qu'**en position de maintien, l'axe d'articulation (18) se trouve en dehors du point de basculement (WP) de la trajectoire de déplacement (B), d'une distance définie par un angle de déviation (AW2) de la bielle menée (15), d'au moins 1° autour de son axe d'articulation (19) par rapport à la position de maintien.

4. Machine à mouler par injection selon l'une des revendications précédentes, **caractérisée en ce qu'**en direction d'avance (Z), la trajectoire de déplacement (B) présente une ramification d'avance (BZ) et une ramification de pression (BP) adjacente à celle-ci, s'étendant plus loin dans la direction d'avance (Z) et sur le tracé de laquelle la plaque de fixation mobile (6) continue à être déplaçable de la position de maintien vers la plaque de fixation fixe (2).

5. Machine à mouler par injection selon la revendication 4, **caractérisée en ce que** la ramification d'avance (BZ) est conçue par rapport à la ramification de pression (BP) de manière à rendre le rapport de démultiplication entre le déplacement de l'élément d'entraînement (9) et la plaque de fixation mobile (6) supérieur dans la ramification d'avance (BZ) à ce qu'il est dans la ramification de pression (BP).

6. Machine à mouler par injection selon l'une des revendications précédentes, **caractérisée en ce qu'**en position de maintien, la bielle auxiliaire (13) est orientée dans une direction s'éloignant de la plaque de fixation mobile (6) de sorte que la bielle auxiliaire (13) et la bielle centrale (14) se chevauchent au moins partiellement en position de maintien.

7. Machine à mouler par injection selon l'une des revendications précédentes, **caractérisée en ce qu'**en position de maintien, la bielle centrale (14) est orientée dans une direction s'éloignant de la plaque de fixation mobile (6), de sorte que la bielle auxiliaire (13), la bielle centrale (14) et la bielle menée (15) se chevauchent au moins partiellement en position de maintien.

8. Machine à mouler par injection selon l'une des revendications précédentes, **caractérisée en ce que** la longueur maximale de la bielle auxiliaire (13) équivaut à la moitié de la longueur de la bielle centrale (14) ou de la bielle menée (15).

9. Machine à mouler par injection selon l'une des revendications précédentes, **caractérisée en ce que** l'axe d'articulation (19) entre la bielle menée (15) et la plaque de fixation mobile (6) coïncide avec le centre de courbure de la trajectoire de déplacement (B) en position de maintien.

10. Machine à mouler par injection selon l'une des revendications précédentes, **caractérisée en ce qu'**en position de maintien, la bielle menée (15) est dirigée dans la direction de la plaque support (5) ou dans la direction opposée à celle-ci depuis l'axe d'articulation (18).

11. Machine à mouler par injection selon l'une des revendications précédentes, **caractérisée en ce que** la fonction de la plaque support (5) est assurée par la plaque de fixation (2), le dispositif de bielles (12) se trouvant du côté de l'unité d'injection (1), et les colonnes (4) entrant dans la plaque de fixation fixe (2) et fixement raccordées à la plaque de fixation mobile (6) étant reliées de manière articulée à la bielle menée (15).

12. Machine à mouler par injection selon l'une des revendications précédentes, **caractérisée en ce qu'**au moins deux dispositifs de bielles (12) correspondant l'un à l'autre sont prévus avec symétrie miroir par rapport au plan d'axe d'entraînement (A) de l'élément d'entraînement (9).

13. Machine à mouler par injection selon l'une des revendications précédentes, **caractérisée en ce que** la direction d'avance (Z) de la plaque de fixation mobile (6) est orientée horizontalement ou verticalement.

14. Machine à mouler par injection selon l'une des revendications précédentes, **caractérisée en ce que** l'élément d'entraînement est entraîné par un entraînement à piston-cylindre pneumatique ou hydraulique, une crosse (9) à mécanisme à vis (8), un mécanisme à crémaillère ou un moteur linéaire.
